(19) Europäisches Patentamt
European Patent Office
Office européen des brevets

(11) **EP 3 726 465 A1**

(12) **EUROPEAN PATENT APPLICATION**

(43) Date of publication:
**21.10.2020   Bulletin 2020/43**

(51) Int Cl.:
***G06T 7/00*** *(2017.01)*         ***G06T 7/12*** *(2017.01)*
***G06T 7/143*** *(2017.01)*       ***G06K 9/00*** *(2006.01)*

(21) Application number: **20167175.7**

(22) Date of filing: **31.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.04.2019   US 201916380759**

(71) Applicant: **NVIDIA Corporation**
**Santa Clara, CA 95051 (US)**

(72) Inventors:
• **YANG, Dong**
  **Santa Clara, CA 95051 (US)**
• **XU, Daguang**
  **Santa Clara, CA 95051 (US)**
• **LIU, Fengze**
  **Santa Clara, CA 95051 (US)**
• **XIA, Yingda**
  **Santa Clara, CA 95051 (US)**

(74) Representative: **Kraus & Weisert**
**Patentanwälte PartGmbB**
**Thomas-Wimmer-Ring 15**
**80539 München (DE)**

(54) **IDENTIFYING IMAGE SEGMENTATION QUALITY USING NEURAL NETWORKS**

(57)   Comparison logic compares boundaries of features of or more images based, at least in part, on identifying boundaries and indication logic coupled to the comparison logic to indicate whether the boundaries differ by at least a first threshold. The boundaries might comprise a first label mask representing boundaries of objects in an image that are boundaries in a segmentation determined from a segmentation process and a second label mask from a shape evaluation process applied to the first label mask. The indication logic might be configured to compare the first label mask and the second label mask to determine a quality of the segmentation. A neural network might perform the segmentation. Shape evaluation using the first label mask as an input and the second label mask as an output might be performed by a variational autoencoder. A graphical processing unit (GPU) might be used for the segmentation and/or the autoencoder.

FIG. 3

**Description**

BACKGROUND

In image processing, segmentation refers to identifying boundaries of elements of an image, such as dividing regions in an image according to boundaries of objects depicted in the image. A segmentation process might use a trained neural network for automated boundary detection. Segmentation might be useful in processing medical images as well as in other fields. An automated segmentation process may fail, when encountering a rare image that does not segment easily. Sometimes, additional training of the neural network using additional training data might help with some automated segmentation processes, but it still may fail on the rare cases that might not have counterparts in the training data. As a result, it can be hard to completely prevent a segmentation process failure.

One solution is to also have an automated process for quality assessment. An applied Bayesian neural network might be used to capture an uncertainty of the segmentation result and base the quality assessment based on the uncertainty. However, this also suffers from rare events since a segmentation process might make a mistake and yet be confident about that mistake on some rare events.

BRIEF DESCRIPTION OF THE DRAWINGS

Various techniques will be described with reference to the drawings, in which:

FIG. 1 illustrates an example of a segmentation, in accordance with an embodiment;
FIG. 2 illustrates a diagram of a system for training a neural network, in accordance with an embodiment, to evaluate segmentations of input images;
FIG. 3 illustrates a diagram of a system for validating a neural network to be validated, in accordance with an embodiment;
FIG. 4 illustrates a diagram of a variational autoencoder (VAE) to be trained on ground truth label masks, in accordance with an embodiment;
FIG. 5 illustrates a process for training a segmenter on segmenting images to arrive at label mask for images and for training a VAE on ground truth label masks for assessing quality of the label masks output by the segmenter, in an embodiment;
FIG. 6 illustrates a diagram of a system for processing images, generating label masks for the images, applying the label masks to an autoencoder, comparing the label masks with the outputs of the autoencoder, and taking actions depending on the results of the comparisons, in accordance with an embodiment;
FIG. 7 illustrates an autoencoder that encodes an input label mask to a latent representation and decodes the latent representation to an output label mask, in accordance with an embodiment;
FIG. 8 illustrates an example of parallel processing unit ("PPU"), in accordance with an embodiment;
FIG. 9 illustrates an example of a general processing cluster ("GPC"), in accordance with one embodiment;
FIG. 10 illustrates an example of a memory partition unit, in accordance with one embodiment;
FIG. 11 illustrates an example of a streaming multi-processor, in accordance with one embodiment; and
FIG. 12 illustrates a computer system in which the various examples can be implemented, in accordance with one embodiment.

DETAILED DESCRIPTION

Segmentation is a process of determining from an image where boundaries of elements depicted in the image are, and possible also labeling those objects. Humans can often easily identify where one object in an image begins and other objects end, however this can be a hard process for a computer system to perform. Also, in some types of images, even untrained humans can have a hard time discerning boundaries of objects or the existence of objects in an image. As one example, a computed tomography ("CT") scan might image parts of a human body and a professional radiologist might spend significant time observing, identifying, and labeling boundaries of objects in the CT scan data and so it would be beneficial to have an automated process that can perform those tasks, albeit with some flag, indication, or alarm in the rare cases where the automated segmentation process fails.

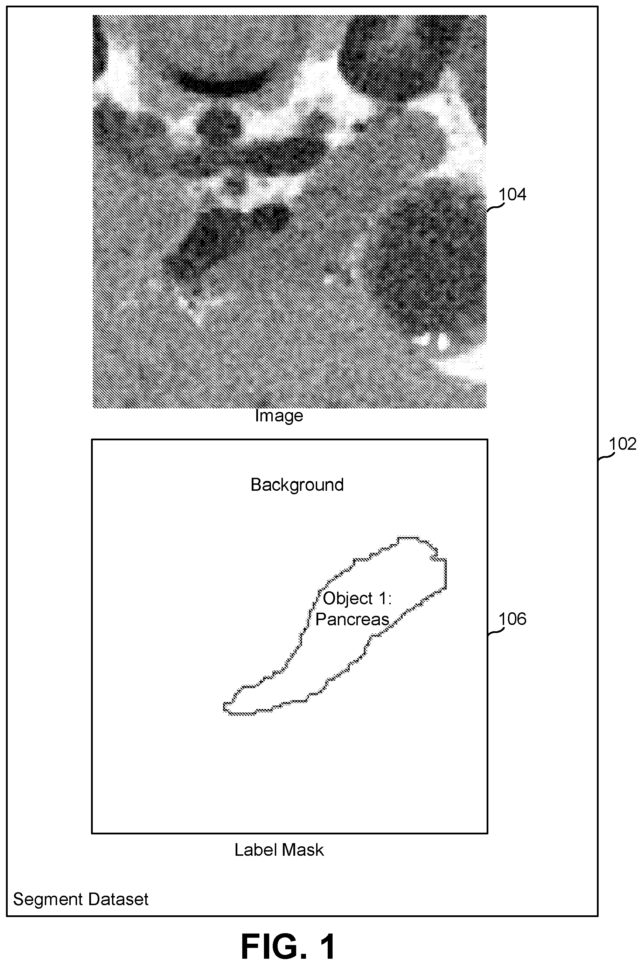

FIG. 1 illustrates an example of a segmentation, in particular showing a segment dataset 102 comprising an image 104 and a label mask 106, in an embodiment. Each of these items is represented as stored computer-readable data in a memory and/or as computer-readable data in transmission. In an embodiment, the image 104 is taken as a two-dimensional slice of a three-dimensional CT scan of a human body directed at an abdomen of a patient and the label mask 106 is obtained via a user interface from a professional radiologist manually inputting the determined boundaries of the pancreas and adding a label to identify the boundaries as being that of the pancreas. In more complex images, in an embodiment, there are more than one bounded element of the CT scan and corresponding labels, and include multiple objects with incomplete boundaries and other features.

In an embodiment, a "segment dataset" refers to a data structure that comprises an image and its associated label mask. In an embodiment, one goal of a segmentation system is to be able to generate at least the boundaries of objects in an image in computer-generated fashion so that a human does not have to manually input the boundaries of objects in images. A collection of segment datasets, in an embodiment, comprises one or more segment datasets, each of which would comprise an image and an associated label mask. In a specific embodiment, a label mask comprises boundaries of objects, object numbers uniquely identifying closed boundaries in the label mask and a reference to the background of the image, and names for objects.

In an embodiment, a collection of segment datasets (*X, Y*) comprises a collection, *X,* of images, in computer-readable data form, along with a collection, *Y,* of corresponding label masks, where each label mask indicates partial or full segmentation of its corresponding image. In some embodiments, the collection includes labels for segments of the label mask, whereas in other embodiments, the label mask includes segmentation boundaries without segment labels. Where the label mask for an image is created by a person examining the image, or by a known good process, it is often referred to as a "ground truth" or "GT" label mask. In an embodiment, collection (*X, Y*) comprises a training subcollection ($X_T, Y_T$) and a validation subcollection ($X_V, Y_V$). The training subcollection has label masks that are ground truth label masks and those can be used to train a neural network. In an embodiment, the neural network is tested using the validation subcollection, which also has label masks that are ground truth label masks; the validation subcollection can be used to validate the training of the neural network.

In an embodiment, as an example, if *F*() refers to a segmentation process, the quality of the segmentation process is tested by comparing $F(X_V)$ and $Y_V$ for various segment datasets of the validation subcollection. In an embodiment, an input to a trained neural network is an image *X* and an output might be *F(X)*. Where the corresponding ground truth label mask, *Y,* is not known, *F(X)* is usable as the label mask for image *X*.

Despite being trained, in an embodiment, the neural network might nonetheless output a label mask *F(X)* that is not a good segmentation of the image *X*, perhaps because the contents of image *X* are rare or unexpected. In an embodiment, by using a different process for determining an estimate for *Y*, that determination can be compared with *F(X)* to determine if the segmentation process *F*() worked on image *X*. If boundaries of objects in image *X* are correctly identified, then the output of the separate process will be close to *F(X)*, which is the output of the neural network that is part of the trained segmenter. An alarm (e.g., a notification or a change in an interface), in an embodiment, is provided to a user of a system when there is a significant difference between boundaries identified that is more than an acceptable threshold from the output of the trained segmenter.

In an embodiment, an image is processed with a first neural network to determine a first segmentation of the image (e.g., a label mask indicating at least the boundaries of some objects in the image). The first segmentation, in an embodiment, is the output of other than a neural network, but in many examples described herein, that first segmentation is an output of a neural network. The label mask is passed through a second neural network that effectively maps the label mask into a feature space. The output of that second neural network, in an embodiment, is then be used to predict or estimate the quality of the segmentation in that label mask.

In an embodiment, the second neural network comprises a variational autoencoder ("VAE") that takes as it input a label mask and outputs and output label mask. An autoencoder is a neural network that comprises an encoder that encodes its input data into a latent representation that is a compressed form of the input data and also comprises a decoder that decodes the latent representation and to the original input data as close as possible, where training the autoencoder involves reducing differences between the encoder input and the decoder output. In a VAE, in the learning process, the VAE makes strong assumptions concerning the distribution of variables in the latent representation. In other embodiments, more generally, a type of fully convolutional neural network is used where the VAE is described herein as being used.

In an embodiment, the first segmentation produced by the first neural network is compared to the second segmentation produced by the VAE. In an embodiment, this is done using a loss function. In another embodiment, this is done using another method. In an embodiment, the second neural network is trained using segmentations of images that are known to be good. If the comparison shows that the first and second segmentations are close, the first neural network probably worked well. If they are significantly different, there was probably a problem. In such cases, where the segmentation is part of a system with a user interface, a flag, alert, alarm, or the like could be output to alert a user that the segmentation is suspect.

As for the strong assumptions concerning the distribution of variables in the latent representation, in an embodiment one approach is to project segmentation results into a low-dimensional feature space, and then have the VAE learn classifiers and/or regressors in the feature space to predict the qualities of segmentation results. In an embodiment, the feature space uses shape features with strong prior information shared among different data, to predict the qualities of segmentation results given different segmentation algorithms on different datasets.

In an embodiment, the shape feature of a segmentation result is captured using the value of loss function and the segmentation result tested using a VAE that is trained using only ground truth masks (i.e., label masks that are ground truth label masks). As a result, bad segmentations could be expected to result in bad shapes that become rare events for VAE and will result in large loss values.

In the preceding and following description, various techniques are described. For purposes of explanation, specific configurations and details are set forth in order to provide a thorough understanding of possible ways of implementing the techniques. However, it will also be apparent that the techniques described below may be practiced in different configurations without the specific details. Furthermore, well-known features may be omitted or simplified to avoid obscuring the techniques being described.

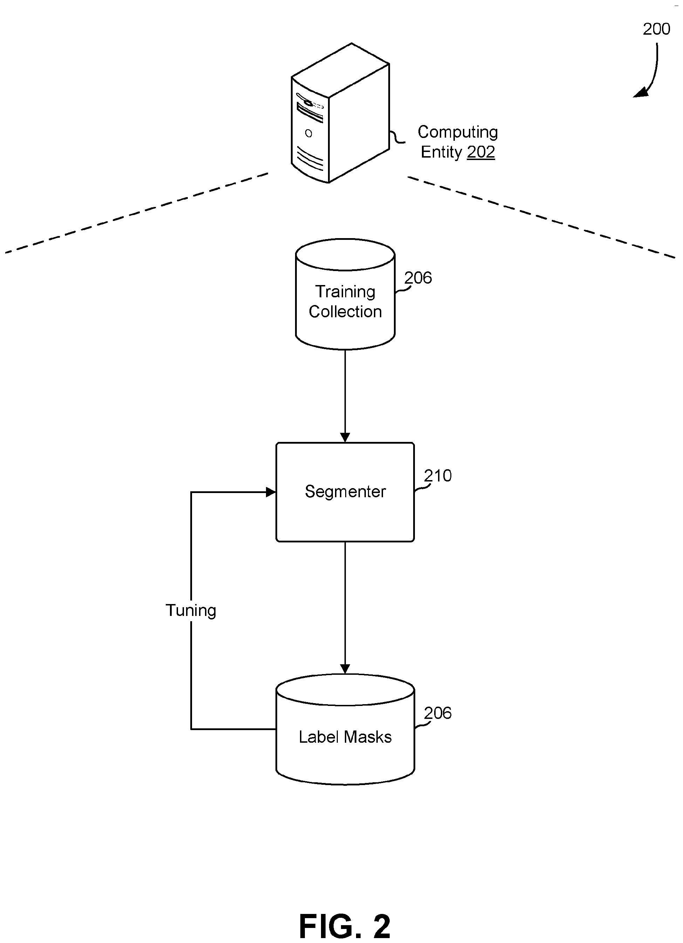

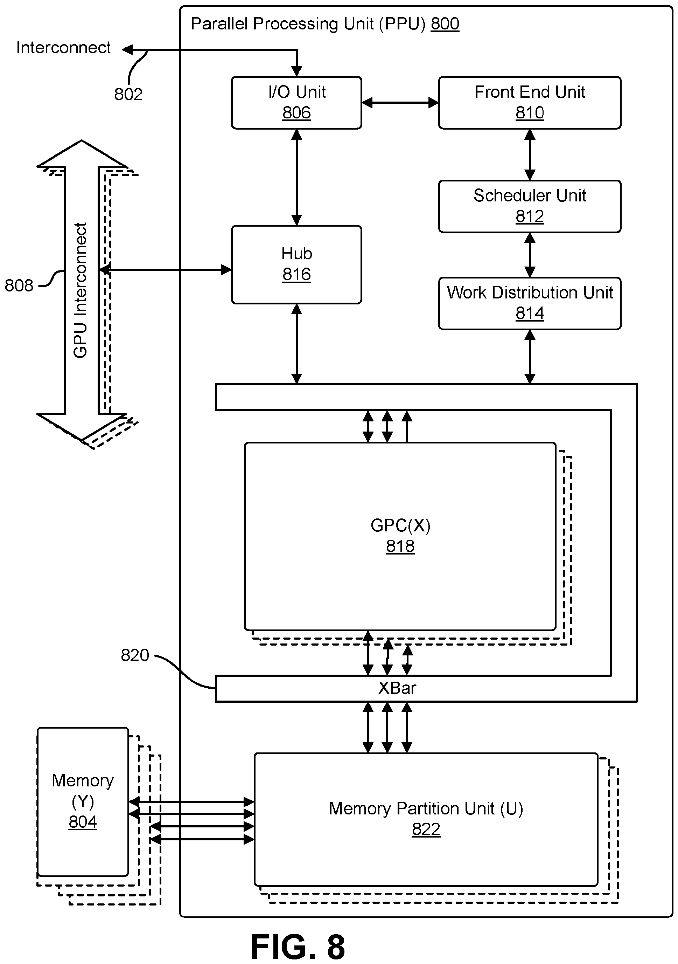

FIG. 2 illustrates a diagram of a system 200 in which one or more arithmetic logic circuits at least partially cause a neural network to be trained, in accordance with an embodiment to evaluate segmentations of input images. In an embodiment, a computing entity 202, such as a computer system or computer server, processes a training collection of images and label masks and generates segmentations, such as in the form of label masks. In an embodiment, the computing entity 202 is, or includes, a computer system or processing unit such as one or more of those described in connection with FIGS. 8-12. In an embodiment, the computing entity 202 is a distributed system comprising multiple computer servers that collectively operate as a computing entity that generates the segmentations. In an embodiment, the computing entity 202 is a server computer system, a server cluster, a virtual computer system, a virtual server, a virtual runtime environment, a container environment, a serverless execution environment, or service hosting system. In an embodiment, the computing entity 202 is, or includes, an application-specific integrated circuit (ASIC) microchip that is designed for a specific use or application. In an embodiment, the computing entity can include specialized circuity for sparse activation; low-precision computations; low-latency operations (e.g., in a real-time operating system (RTOS) computing environment); low-power hardware; and combinations thereof. In an embodiment, the computing entity 202 has associated memory in a memory hierarchy such that there are regions of faster memory (e.g., registers and L1 cache) as well as regions of slower memory (e.g., main memory).

In an embodiment, the computing entity 202 is used in training a segmenter of a segmentation system and includes storage for a training collection 204 and storage for a set of training output label masks 206. In an embodiment, the computing entity 202 implements a segmenter 210, such as by executing program code having program instructions that when execute, perform the role of a neural network that can be trained on the training collection 204. In an embodiment of an operation of computing entity 202, the training collection 204 comprises a plurality of images and a corresponding ground truth label mask for each image, wherein the ground truth label mask for an image in training collection 204 represents a known good segmentation of that image and possibly also labels for some or all segments of the segmentation. In an embodiment, the segmenter 210 is trained such that its output for a training image is a label mask that approximates the ground truth label mask for that image. Where the output training label mask does not match the ground truth label mask well, training feedback can be provided to the segmenter 210 to improve the output.

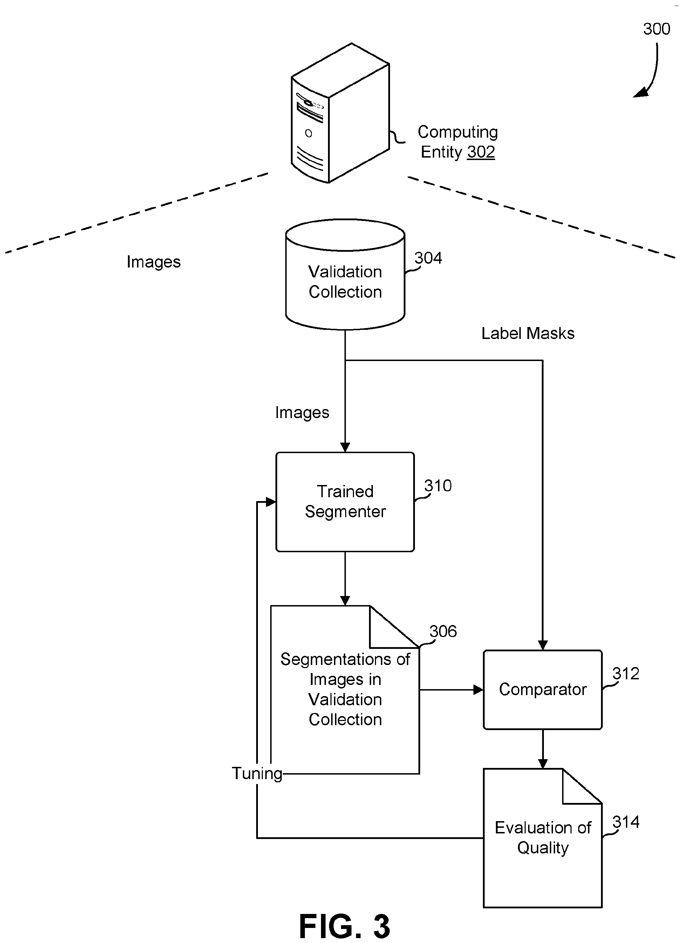

Various other elements in the figures can be implemented, in an embodiment, using one or more arithmetic logic circuits, a computer system or computer server, or processing unit such as one or more of those described in connection with FIGS. 8-12. For example, in an embodiment, elements of FIGS. 3-7 are implemented by a computing entity having memory and that can execute program instructions, such as a distributed system comprising multiple computer servers that collectively operate as a computing entity that generates segmentations or performs training, including, in embodiments, a server computer system, a server cluster, a virtual computer system, a virtual server, a virtual runtime environment, a container environment, a serverless execution environment, a service hosting system, an application-specific integrated circuit (ASIC) microchip that is designed for a specific use or application, and/or specialized circuity for sparse activation; low-precision computations; low-latency operations (e.g., in a real-time operating system (RTOS) computing environment); low-power hardware; and combinations thereof. In an embodiment, data can be stored in associated memory in a memory hierarchy such that there are regions of faster memory (e.g., registers and L1 cache) as well as regions of slower memory (e.g., main memory) and elements can be implemented by program code having program instructions that when executed, perform the role of the element as described.

FIG. 3 illustrates a diagram of a system 300 in which one or more arithmetic logic circuits at least partially cause a trained neural network to be validated, in accordance with an embodiment. In an embodiment shown, a computing entity 302 implements a validation collection 304 of segment datasets, where images of the validation collection 304 are applied to an input of a trained segmenter 310, which outputs segmentations of images of the validation collection 304. In an embodiment, a comparator 312 compares the output segmentations of images to the label masks from the validation collection 304, wherein those label masks are ground truth label masks, and outputs evaluations 314 of quality of the output segmentations. These evaluations 314 can be used for fine tuning the trained segmenter.

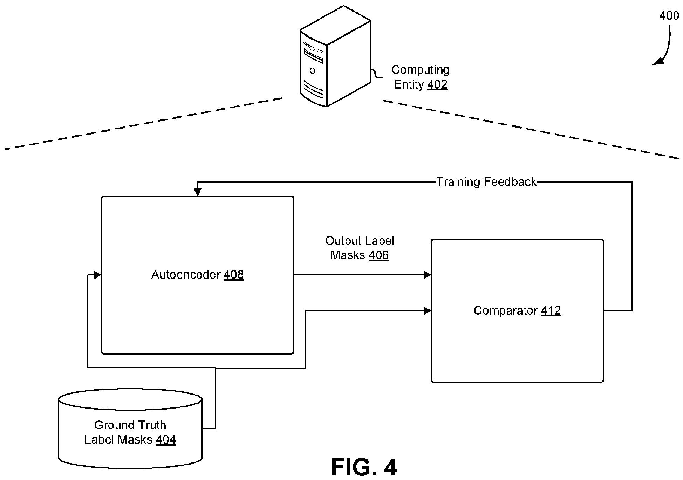

FIG. 4 illustrates a diagram of a system 400 in an embodiment in which one or more arithmetic logic circuits at least partially cause a variational autoencoder (VAE) to be trained on ground truth label masks 404. In an embodiment shown, a computing entity 402 includes a VAE 408 that takes the ground truth label masks 404 as its input and outputs output label masks 406. In an embodiment, a comparator 412 compares the ground truth label masks 404 and the output label masks 406 to determine the training feedback needed for the VAE 408. In an embodiment, the training results in adjustment of weights and connections between layers of the VAE 408 to optimize or minimize a loss function.

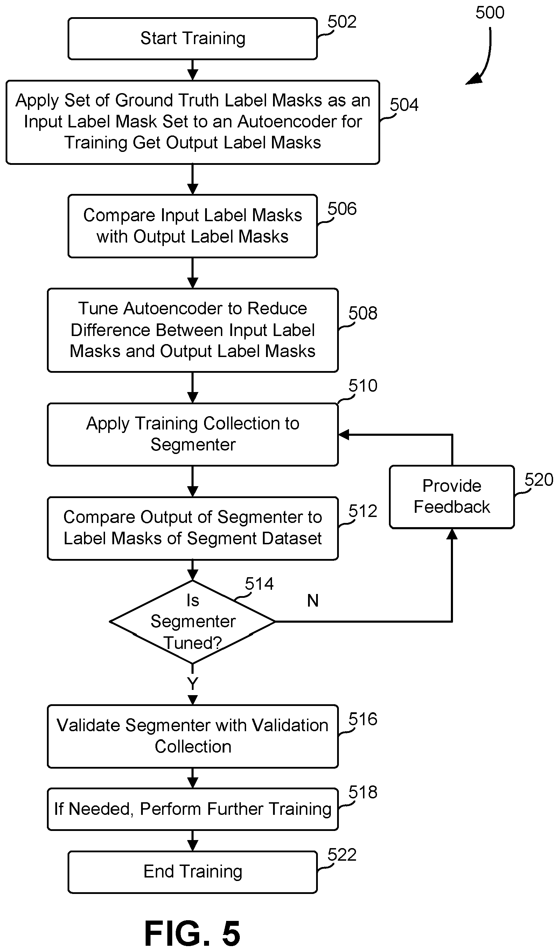

FIG. 5 shows an illustrative example of a process 502 in an embodiment for training a segmenter on segmenting images to arrive at label mask for images and for training a VAE on ground truth label masks for assessing quality of the label masks output by the segmenter. In an embodiment, the process begins with applying a set of training label masks (step 504) that comprise ground truth label masks or other label masks known to be good examples of segmentation. In an embodiment, the set of training label masks is applied to an autoencoder, such as VAE 408 referenced herein as the input to the autoencoder. As explained herein, in an embodiment, an autoencoder will encode its input into a latent representation and then decode the latent representation into an output of the autoencoder. Next, at step 506, in an embodiment, the segmenter system in training compares the output label masks output by the autoencoder with the input label masks input to the autoencoder. At step 508, the autoencoder is tuned so as to reduce differences, as might be measured by a loss function, between the input label masks and the output label masks. Once this is done, in an embodiment, the autoencoder takes in an input label mask and outputs an output label mask.

Then, at step 510, a training collection of segment datasets (images and their corresponding label masks) in an embodiment is applied to a segmenter. Since the label masks are available for those segment datasets, a label mask for an image can be compared (Step 512) with an output of the segmenter. In an embodiment, the segmenter system in training can then (Step 514) check whether there is sufficient matching of a label mask in the training collection and the output of the segmenter. A well-trained segmenter can be expected to output a label mask for an image in a segment dataset that is similar to the label mask of the segment dataset, if the image is not an unusual image, so this comparison is a valid test of whether the segmenter is trained.

In an embodiment, if the segmenter is not sufficiently tuned, feedback can be provided (step 520) and the process returns to step 510 for additional training. In an embodiment, if the segmenter is sufficiently tuned, the process can move to step 516, wherein the validation collection is applied to the segmenter and if needed (step 518) further training can be provided, and the training process completes (step 522).

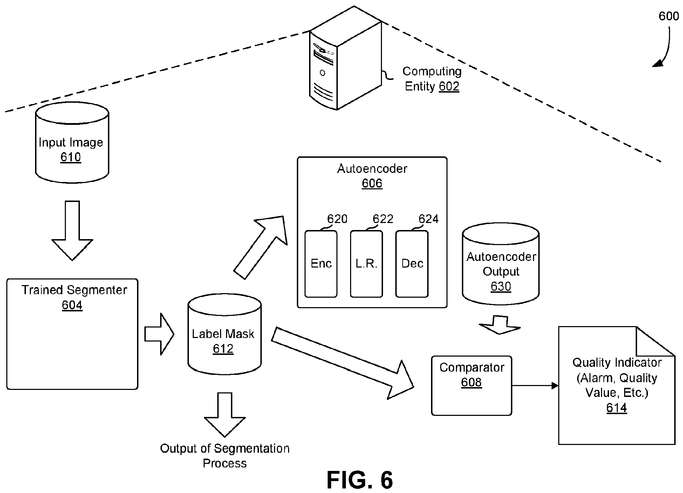

FIG. 6 illustrates a diagram of a system 600 in an embodiment in which one or more arithmetic logic circuits at least partially process an input image, generate a label mask for the input image, apply the label mask to an autoencoder, compare the label mask with the output of the autoencoder, and take an action depending on the results of the comparison. In an embodiment shown, a computing entity 602, such as a computer system or computer server, includes a trained segmenter 604, an autoencoder 606, a comparator 608, storage for an input image 610, storage for a label mask 612, and storage for a quality indicator 614. In an embodiment, the autoencoder 606 comprises an encoder 620, storage for a latent representation 622, and a decoder 624. In an embodiment, the autoencoder 606 is a variational autoencoder trained on shape features. In an embodiment, the computing entity 602 is usable with a plurality of images, some of which may be three-dimensional images and some of which may be two-dimensional images. In an embodiment, the computing entity 602 is, or includes, a computer system or processing unit such as one or more of those described in connection with FIGS. 8-12.

In an embodiment, system 600 operates according to the processes described in FIG. 5 for training and then in operation, the trained segmenter 604 takes in the input image 610 without requiring a ground truth as to the labels or segmentation of objects in the input image 610. In an embodiment, the train segmenter 604 outputs the label mask 612 as the output of system 600. In an embodiment, the label mask 612 informs the user of objects present in the input image 610 and boundaries of those objects. In an embodiment, the label mask 612 is applied to an input layer of the autoencoder, which in turn outputs an autoencoder output 630, which is in the form of a label mask. In an embodiment, the comparator 608 compares the autoencoder output 630 with the label mask 612 and outputs the quality indicator 614. In an embodiment, the quality indicator 614 can be an alarm, a flag, a color, and/or a value that is shown to the user as part of a user interface to indicate whether the label mask 612 is likely a good segmentation of the input image 610. For a poor segmentation, it is more likely that the input and output of the autoencoder 606 will not closely match, but for a good segmentation, it is more likely that they will. In an embodiment, where the autoencoder 606 is trained on shape features, the latent representation in the autoencoder 606 is likely to be representative of shape features.

In an embodiment, the comparator 608 comprises logic, a general purpose ALUs, fixed function hardware, FPGA, or the like. While shown as a separate component in FIG. 6, in an embodiment, comparator 608 might be implemented in combination with the trained segmenter 604 and the autoencoder 606. For example, a dedicated hardware component might process input images to segment them and form label masks, process the label masks through the autoencoder, and compare the label masks with the autoencoder output.

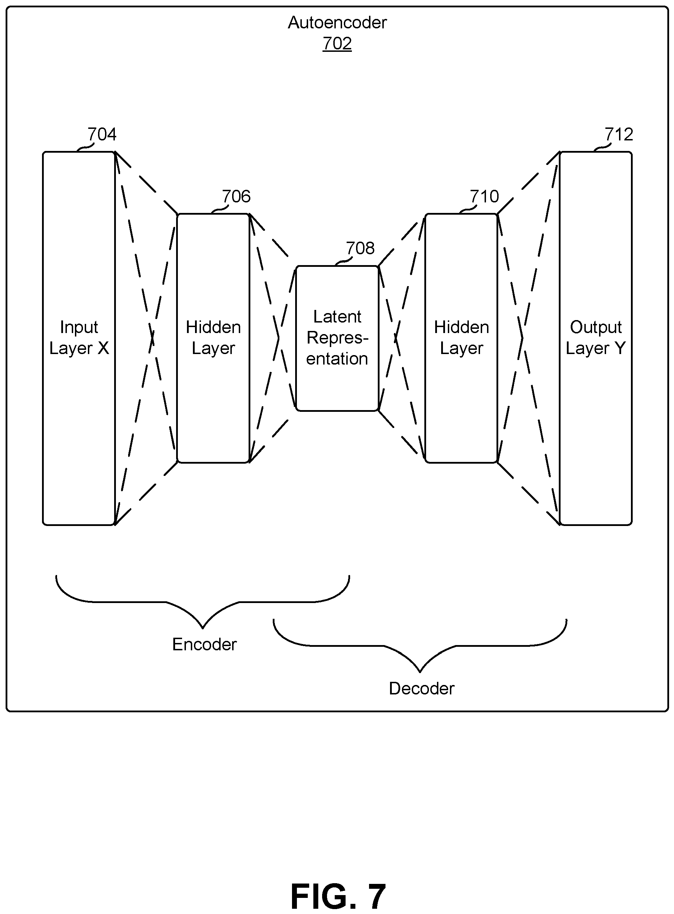

FIG. 7 illustrates a diagram of an autoencoder 702 in an embodiment in which one or more arithmetic logic circuits at least partially encode an input label mask to a latent representation and decode the latent representation to an output label mask. In an embodiment shown, the autoencoder 702 is a neural network comprising several layers, including an input layer 704, coupled to a first hidden layer 706, coupled to a latent layer 708, coupled to a second hidden layer 710, that is in turn coupled to an output layer 712. In an embodiment, the autoencoder 702 is, or includes, a computer system or processing unit such as one or more of those described in connection with FIGS. 8-12.

Specific Example Implementation

In a specific example described in this section, a system is described in various embodiments wherein a variational autoencoder is trained with a set of known good label masks (a label mask) and the variational autoencoder is trained to encode each input label mask into a latent representation and then decode an output label mask from that latent representation, where the training seeks to reduce losses from the encoding and decoding. The latent representation represents shape features.

The use of shape feature in a process of segmenting objects often provides stable shapes among different cases, especially in volumetric images (i.e., data corresponding to voxel values for a three-dimensional image). The shape feature can provide strong prior information for judging the quality of a segmentation result, i.e., bad segmentation results in a label mask tend to have bad shapes and vice versa. As used herein, a "prior" such as a "shape prior" refers to data that represents some assumptions made, such as a machine-learned prior notion of plausible shapes or otherwise determined prior notion of shapes.

Modelling the shape prior from the segmentation mask space can be quicker and simpler computationally than doing so in the image space and the shape prior can be shared among different datasets while the features like image intensity are affected by many factors. That means the shape feature can deal with not only rare events, but also different data distributions in the image space, which can provide good generalization and potential in transfer learning. In an embodiment, a VAE is used to capture the shape feature. In an embodiment, the VAE is trained on the ground truth label masks, and afterwards the value of the loss function is computed as the shape feature of a segmentation result when it is tested with the VAE network. In an embodiment, after the VAE is trained, bad segmentation results with bad shapes would be rare events to the VAE because it is trained using only the ground truth masks - known good label masks that are under the distribution of normal shapes. Thus they will have larger loss value. In this sense, the segmentation system uses the fact that the learning process will perform badly on the rare events. Formally speaking, the loss function, known as the variational lower bound, can be optimized to approximate the function log $P(Y)$ during the training process. So after the training, the value of the loss function given a segmentation result, $\hat{Y}$, is close to log $P(\hat{Y})$ and thus is a good definition for the shape feature.

In an embodiment, the VAE-based quality checking system outputs to an alarm system to signal bad segmentations. In another embodiment, other steps are taken in response to detection of bad segmentations. The qualities of the segmentation results can be well predicted using these systems. In an embodiment, to validate the effectiveness of the alarm system, it is tested on multiple segmentation processes. These segmentation processes can be trained on one dataset and tested on several other datasets to simulate when the rare events occur.

To define logic of part of the process, denote the datasets as $(X, Y)$, where $X$ is a set of images and $Y$ is the label mask of $X$, i.e., the label masks that are known good (ground truth) segmentations of the images in $X$. The datasets $(X, Y)$ can be divided into a training set $(X_T, Y_T)$ and a validation set $(X_V, Y_V)$. Here, $F()$ refers to a segmentation process trained on $X$. In an embodiment, the performance of $F$ on $X_V$ is be evaluated using $Y_V$, but as explained herein, in an embodiment, the segmentation system can evaluate without needing $Y_V$. Formally, the training system tries to find a function $L$ such that Equation 1 is satisfied.

$$A(F(X), Y) = L(F, X; \omega) \qquad \text{(Eqn. 1)}$$

In Equation 1, $A$ is a function used to calculate the similarity of the segmentation result $F(X)$ respect to the ground truth $Y$, i.e., the quality of $F(X)$. Failures can occur when $X$ is a rare event. But to detect whether an image $X$ is within the distribution of training data is very hard because of the complex structure of image space, and actually that is what $F$ is trained to learn. The properties of $F$ can be encoded by sampling the parameters of $F$ and calculating the uncertainty of output, and the uncertainty does help predict the quality, but the performance strongly relies on $F$. It requires $F$ to have Bayesian structure, but well-trained $F$ need not be so constrained. The uncertainty will mainly distribute on the boundary of segmentation prediction. Adding that constraint changes Equation 1 to Equation 2.

$$A(F(X), Y) = L(F(X); \omega) \qquad \text{(Eqn. 2)}$$

In an embodiment, by adding this constraint, the information from $F$ and $X$ is used, but not in direct way. A specific process might use a two-step method, where the first step is to encode a segmentation result $F(X)$ into a feature space, and the second step to learn from the feature space to predict the quality of $F(X)$. The shape feature can be captured from $F(X)$, denoted here as $S(F(X); \theta)$. In that case, Equation 2 becomes Equation 3.

$$\Lambda(\mathrm{F}(X), Y) = L(S(F(X);\theta);\omega) \qquad \text{(Eqn. 3)}$$

Shape Features with a Variational Autoencoder

In an embodiment, the shape feature is captured from the VAE trained with the ground truth masks $Y \in Y_T$, the shape of the segmentation masks as the distribution of the masks in volumetric form. Assuming the normal label $Y$ obeys a certain distribution $P(Y)$, for a predictive mask $\hat{y}$, its quality should be related with $P(Y=\hat{y})$. In an embodiment, the segmentation system estimates the function $P(Y)$. Because a VAE is used, an estimation function $Q(z)$ is found that is minimizing a difference between $Q(z)$ and $P(z|Y)$, where $z$ is the variable of the latent space that $Y$ is encoding into, optimizing as in Equation 4.

$$KA[Q(z)\|P(z|Y)] = E_{z\sim Q}[\log Q(z) - \log P(z|Y)] \qquad \text{(Eqn. 4)}$$

In Equation 4, $KA$ is the Kullback-Leibler divergence. By replacing $Q(z)$ with $Q(z|Y)$ and rearranging terms, finally it would be deduced to the core equation of VAE as in Equation 5.

$$\log P(Y) - KA[Q(z|Y)\|P(z|Y)] = E_{z\sim Q}[\log P(Y|z)] - KA[Q(z|Y)\|P(z)] \qquad \text{(Eqn. 5)}$$

In Equation 5, $P(z)$ is the prior distribution chosen for $z$, usually a Gaussian distribution, and $Q(z|Y)$, $P(Y|z)$ correspond to the encoder and the decoder, respectively, in an embodiment. Once $Y$ is given, $\log P(Y)$ is a constant. So by optimizing the right-hand side of Equation 5, the variational lower bound of $\log P(Y)$, this optimizes for $KA[Q(z)\|P(z|Y)]$. In an embodiment, a quantity of interest is $P(Y)$. By exchanging the second term in the left-hand side of Equation 5 with all terms in the right-hand side of Equation (5), this results in Equation 6, showing the training process as minimizing the quantity there.

$$E_{Y\sim YT}\, KA[Q(z|Y)\|P(z|Y)]$$
$$= E_{Y\sim YT}\log P(Y) - E_{z\sim Q}[\log P(Y|z)] + KA[Q(z|Y)\|P(z)] \qquad \text{(Eqn. 6)}$$
$$= E_{Y\sim YT}\log P(Y) - S(Y;\theta)$$

In Equation 6, $E_{z\sim Q}[\log P(Y|z)] + KA[Q(z|Y)\|P(z)]$ is denoted as $S(Y;\theta)$ for brevity. As illustrated by Equation 6, , in an embodiment, the training process is actually learning a function to best fit $\log P(Y)$ over the distribution of $Y$. In an embodiment, after training the VAE, $S(Y;\theta)$ becomes a natural approximation for $\log P(Y)$. As a result, $S(Y;\theta)$ can be used as a representative of the shape feature, in an embodiment.

In an embodiment, a Dice Loss function is used when training the VAE and that is useful for medical segmentation tasks. In an embodiment, the final form of $S$ is as shown in Equation 7.

$$S(Y;\theta) = E_{z\sim N(\mu(Y),\Sigma(Y))}\frac{2|g(z)\cdot Y|}{|Y|^2+|g(z)|^2} - \lambda\, KA[N(\mu(Y),\Sigma(Y))\|N(0,1)] \qquad \text{(Eqn. 7)}$$

In an embodiment, the encoder $\mu$, $\Sigma$ and decoder g of Equation 7 are controlled by $\theta$, and $\lambda$ is a coefficient to balance the two terms. The first term is the Dice's coefficient between $Y$ and $g(z)$, ranging from 0 to 1 and equal to 1 if $Y = g(z)$. In an embodiment, $S(Y;\theta)$, the shape feature representative of Equation 7, indicates that after the VAE is trained using data with only normal shape, the predictive mask $\hat{y}$ tends to be more likely in the distribution of normal shape if it can achieve less reconstruction error and is closer to prior distribution in the latent space, since $\log P(\hat{y}) \leq S(\hat{y};\theta)$ holds all the time. On the other hand, for cases with high $P(\hat{y})$ but low $S(\hat{y};\theta)$, it would introduce a large penalty to the object function (see Equation 6), and is less likely to occur for a well-trained VAE.

Using Shape Feature for Predicting Quality

In an embodiment, the shape feature is often good enough for reliable quality assessment. One reason is that, for a segmentation result $F(X)$, the higher $\log P(F(X))$ is, the better shape $F(X)$ is in and thus the higher $L(F(X), Y)$ is. In an embodiment, formally, taking the shape feature captured from the VAE, the segmentation system can predict the quality of a segmentation by fitting a function *L* according to Equation 8.

$$L(F(X), Y) = L(S(F(X);\theta);\omega) \qquad \text{(Eqn. 8)}$$

In an embodiment, the parameter $\theta$ in Equation 8 is learned by training the VAE, using labels in the training data $Y_T$, and is then fixed during the second step. In an embodiment, the function *L* is chosen to be a simple linear model, in which case the energy function the segmentation system optimizes is as shown by Equation 9.

$$E(S(F(X);\theta);a, b) = \|aS(F(X); \theta) + b - L(F(X), Y)\|^2 \qquad \text{(Eqn. 9)}$$

In an embodiment, a linear regression model is used and shows a strong linear correlation between the shape features and the qualities of segmentation results. In Equations 8 and 9, L is the Dice's coefficient, as shown in Equation 10.

$$\Lambda(F(X), Y) = \frac{2|F(X)\cdot Y|2^2}{|F(X)|^2\cdot|Y|^2} \qquad \text{(Eqn. 10)}$$

Training Process

In an embodiment, in the first step of a training process, the VAE is trained only using labels in training data. Then, in an embodiment, in the second step of a training process, $\theta$ is fixed. In an embodiment, to learn *a, b*, one way is to optimize the energy function of Equation 9 using the segmentation results on the training data, as might be shown in Equation 11.

$$\arg\min_{a,b} \sum_{(X,Y)\in(X_T,Y_T)} \|aS(F(X); \theta) + b - \Lambda(F(X),Y)\|^2 \qquad \text{(Eqn. 11)}$$

In an embodiment, the segmentation process *F* that the segmentation system uses to learn *a, b* is referred to herein as the "preparation process." In an embodiment, if *F* is trained on $X_T$, the quality of *F(X)* is expected to always be high, thus providing less information to regress *a, b*. To overcome this, in an embodiment, the segmentation system uses a jackknifing training strategy for *F* on $X_T$, wherein not all of $X_T$ are used at the outset. In an embodiment, the process includes first dividing $X_T$ into $X_T^1$ and $X_T^2$ and then training two versions of *F* on $X_T \setminus X_T^1$ and $X_T \setminus X_T^2$ respectively, say $F_1$ and $F_2$. In an embodiment, the optimizing function is then changed to that of Equation 12.

$$\text{Arg}\min_{a,b} \sum_{k=1,2} \sum_{(X,Y)\in(X_T^k,Y_T^k)} \|aS(F_k(X); \theta) + b - \Lambda(F_k(X),Y)\|^2 \qquad \text{(Eqn. 12)}$$

In an embodiment, using the above process, the segmentation system can solve the problem above by simulating the performance of *F* on the testing set. In an embodiment, an accurate way is to do "leave-one-out" training for *F*, but if the time consumption is not acceptable, two-fold split, wherein $X_T$ is divided into two equal sized subsamples, one for training and one for validation, can be effective enough. In an embodiment, when the training is done, the trained segmenter can be tested using a segmentation algorithm *F* and data *X* to predict the quality using the quality metric of Equation 13.

$$Q = aS(F(X); \theta) + b \qquad \text{(Eqn. 13)}$$

As has now been described, in an embodiment, a segmentation system obtains reliable predictions for the qualities of segmentation results. In an embodiment, an alarm system can be used when the segmentation processes are tested on other datasets, with good quality assessment capability and transferability compared with uncertainty-based methods, direct regression methods, and other methods.

Tests were performed on images taken from public medical datasets comprising 3D abdominal CT images in portal venous phase with a pancreas region fully annotated in each image. The CT scans have resolutions of $512 \times 512 \times h$ voxels with varying voxel sizes. In an embodiment, other images are used instead, or in addition, and the processes referenced herein used on other than medical images. The public medical datasets for testing comprised the NIH Pancreas-CT Dataset (NIH), the Medical Segmentation Decathlon (MSD), and the Multi-atlas Labeling Challenge (MLC).

The NIH Pancreas-CT Dataset (NIH) includes 82 abdominal 3D CT scans (Roth et al., 2015) from 53 male and 27 female subjects. The subjects were selected by a radiologist from patients without major abdominal pathologies or pancreatic cancer lesions. The Medical Segmentation Decathlon (MSD) collected 420 abdominal 3D CT scans from Memorial Sloan Kettering Cancer Center (281 training scans and 139 testing scans). Each of the subjects had cancer lesions within pancreas region. The Multi-atlas Labeling Challenge (MLC) provides 50 (30 training, 20 testing) abdomen CT scans randomly selected from a combination of an ongoing colorectal cancer chemotherapy trial and a retrospective ventral hernia study.

In an embodiment, example segmentation processes might include V-Net (Milletari et al., 2016), 3D Coarse2Fine (Zhu et al., 2018), Deeplabv3 (Chen et al., 2018), and 3D Coarse2Fine with Bayesian structure (Kwon et al., 2018). The first two are based on 3D networks while the Deeplab is 2D-based. In an embodiment, the 3D Coarse2Fine with Bayesian structure is employed to compare with uncertainty based method and is denoted as Bayesian neural network (BNN) afterwards.

For data pre-processing, since the voxel size varies from case to case, which would affect the shape of pancreas and prediction of segmentation, the tests included a step of resampling the voxel size of all CT scans and annotation masks to 1 mm cubed voxels. For training the VAE, a simple alignment is applied on the annotation mask. A cube bounding box, large enough to contain the whole pancreas region, is used and is centered at the pancreas centroid. The volume and the label mask are cropped out and resized to a fixed size of 128 by 128 by 128 voxels. A simple alignment works for these test cases, because the human pose is usually fixed when taking CT scan, e.g., so the organ is not expected to rotate or deform heavily. For a segmentation prediction, the test also crops and resizes the predictive foreground to 128 by 128 by 128 voxels and feeds it into the VAE to capture the shape feature, similar to what is shown in FIG. 6. As used herein, "annotation masks" can refer to, or be used instead of, a label mask that contains ground truth details. Ground truth details might be derived from manual input after examination of an image.

In an embodiment, during the training process, rotations along the *x*, *y*, and *z* axes for -10, 0, and 10 degrees respectively, along with random translations for smaller than 5 voxels on the annotation mask is used as data augmentation. This kind of mild disturbance can enhance the data distribution, while maintaining the alignment properties of the annotation mask. In an embodiment, a suitable dimension for latent space that contains the latent representation in the VAE might be 128. VAEs with latent spaces of different dimension may have different capabilities when it comes to quality assessment. In an embodiment, the hyper parameter $\lambda$ in the object function of the VAE is set to $\lambda=2^{-5}$ to balance the small value of Dice Loss and large KL Divergence. In a test embodiment, the network was trained by an SGD optimizer with batch size 4 and the learning rate for training the VAE was fixed to 0.1. In an embodiment, the framework and other baseline models can be constructed using TensorFlow and the experiments run on an nVidia Tesla VI00 GPU. In one example, the first training step was done in 20000 iterations and completed in around five hours.

In an embodiment, after training, the segmentation system can be used for segmentation and the output of a trained segmenter provided to a VAE for quality assessment. The VAE can predict the qualities of the segmentation results without requiring the use of ground truth masks. The shape feature is useful in predicting the qualities of the segmentation results. To capture the shape feature, in an embodiment, the VAE is trained using only ground truth masks and relying on that rare events will achieve larger value for loss function, and successfully detect the out-of-distribution shape according to the value for loss function in the testing time.

As explained above, the segmentation system in an embodiment comprises a trained segmenter that takes in an image and determines a segmentation, which can be output as a label mask. In an embodiment, an autoencoder trained on shape features takes that label mask as its input and outputs a resulting label mask that is formed when the autoencoder encodes the label mask to a latent representation and then decodes that latent representation. In an embodiment, there is less loss in the autoencoding process when there is a good segmentation and more loss when there is a bad segmentation, where the quality of the segmentation represents how well boundaries of objects in an image are correctly identified. In an embodiment, a comparator checks whether boundaries between objects in an image are correctly identified by the output of the autoencoder to its input. If boundaries of objects in an image are correctly identified, those boundaries will be close to the output of the autoencoder. An alarm (e.g., notification or change in an interface) might be provided to a user of the system when there is a significant difference between boundaries identified more than an acceptable threshold from the output of the autoencoder.

In a particular embodiment, an image is processed with a first neural network to determine a first segmentation of the image (i.e., output that indicates the boundaries of objects in the image), while in other embodiments other than a neural network is used for segmentation. In an embodiment, the segmentation is passed through a variational auto encoder (VAE) to obtain a second segmentation. In an embodiment, the first segmentation and second segmentation are compared, which might be done using a loss function. If the comparison shows that the first and second segmentations are close, the segmenter probably worked well. If they are significantly different, there was probably a problem. In an embodiment, the autoencoder is trained using segmentations of images that are known to be good segmentations. Other embodiments may be apparent upon reading the descriptions herein.

FIG. 8 illustrates a parallel processing unit ("PPU") 800, in accordance with one embodiment. In an embodiment, the PPU 800 is configured with machine-readable code that, if executed by the PPU, causes the PPU to perform some or all of processes and techniques described throughout this disclosure. In an embodiment, the PPU 800 is a multi-threaded processor that is implemented on one or more integrated circuit devices and that utilizes multithreading as a latency-hiding technique designed to process computer-readable instructions (also referred to as machine-readable instructions or simply instructions) on multiple threads in parallel. In an embodiment, a thread refers to a thread of execution and is an instantiation of a set of instructions configured to be executed by the PPU 800. In an embodiment, the PPU 800 is a graphics processing unit ("GPU") configured to implement a graphics rendering pipeline for processing three-dimensional ("3D") graphics data in order to generate two-dimensional ("2D") image data for display on a display device such as a liquid crystal display (LCD) device. In an embodiment, the PPU 800 is utilized to perform computations such as linear algebra operations and machine-learning operations. FIG. 8 illustrates an example parallel processor for illustrative purposes only and should be construed as a non-limiting example of processor architectures contemplated within the scope of this disclosure and that any suitable processor may be employed to supplement and/or substitute for the same.

In an embodiment, one or more PPUs are configured to accelerate High Performance Computing ("HPC"), data center, and machine learning applications. In an embodiment, the PPU 800 is configured to accelerate deep learning systems and applications including the following non-limiting examples: autonomous vehicle platforms, deep learning, high-accuracy speech, image, text recognition systems, intelligent video analytics, molecular simulations, drug discovery, disease diagnosis, weather forecasting, big data analytics, astronomy, molecular dynamics simulation, financial modeling, robotics, factory automation, real-time language translation, online search optimizations, and personalized user recommendations, and more.

In an embodiment, the PPU 800 includes an Input/Output ("I/O") unit 806, a front-end unit 810, a scheduler unit 812, a work distribution unit 814, a hub 816, a crossbar ("Xbar") 820, one or more general processing clusters ("GPCs") 818, and one or more partition units 822. In an embodiment, the PPU 800 is connected to a host processor or other PPUs 800 via one or more high-speed GPU interconnects 808. In an embodiment, the PPU 800 is connected to a host processor or other peripheral devices via an interconnect 802. In an embodiment, the PPU 800 is connected to a local memory comprising one or more memory devices 804. In an embodiment, the local memory comprises one or more dynamic random access memory ("DRAM") devices. In an embodiment, the one or more DRAM devices are configured and/or configurable as high-bandwidth memory ("HBM") subsystems, with multiple DRAM dies stacked within each device.

The high-speed GPU interconnect 808 may refer to a wire-based multi-lane communications link that is used by systems to scale and include one or more PPUs 800 combined with one or more CPUs, supports cache coherence between the PPUs 800 and CPUs, and CPU mastering. In an embodiment, data and/or commands are transmitted by the high-speed GPU interconnect 808 through the hub 816 to/from other units of the PPU 800 such as one or more copy engines, video encoders, video decoders, power management units, and other components which may not be explicitly illustrated in FIG. 8.

In an embodiment, the I/O unit 806 is configured to transmit and receive communications (e.g., commands, data) from a host processor (not illustrated in FIG. 8) over the system bus 802. In an embodiment, the I/O unit 806 communicates with the host processor directly via the system bus 802 or through one or more intermediate devices such as a memory bridge. In an embodiment, the I/O unit 806 may communicate with one or more other processors, such as one or more of the PPUs 800 via the system bus 802. In an embodiment, the I/O unit 806 implements a Peripheral Component Interconnect Express ("PCIe") interface for communications over a PCIe bus. In an embodiment, the I/O unit 806 implements interfaces for communicating with external devices.

In an embodiment, the I/O unit 806 decodes packets received via the system bus 802. In an embodiment, at least some packets represent commands configured to cause the PPU 800 to perform various operations. In an embodiment, the I/O unit 806 transmits the decoded commands to various other units of the PPU 800 as specified by the commands. In an embodiment, commands are transmitted to the front-end unit 810 and/or transmitted to the hub 816 or other units of the PPU 800 such as one or more copy engines, a video encoder, a video decoder, a power management unit, etc. (not explicitly illustrated in FIG. 8). In an embodiment, the I/O unit 806 is configured to route communications between and among the various logical units of the PPU 800.

In an embodiment, a program executed by the host processor encodes a command stream in a buffer that provides workloads to the PPU 800 for processing. In an embodiment, a workload comprises instructions and data to be processed by those instructions. In an embodiment, the buffer is a region in a memory that is accessible (e.g., read/write) by both the host processor and the PPU 800 - the host interface unit may be configured to access the buffer in a system memory connected to the system bus 802 via memory requests transmitted over the system bus 802 by the I/O unit 806. In an embodiment, the host processor writes the command stream to the buffer and then transmits a pointer to the start of the command stream to the PPU 800 such that the front-end unit 810 receives pointers to one or more command streams and manages the one or more streams, reading commands from the streams and forwarding commands to the various units of the PPU 800.

In an embodiment, the front-end unit 810 is coupled to a scheduler unit 812 that configures the various GPCs 818 to process tasks defined by the one or more streams. In an embodiment, the scheduler unit 812 is configured to track state information related to the various tasks managed by the scheduler unit 812 where the state information may indicate which GPC 818 a task is assigned to, whether the task is active or inactive, a priority level associated with the task, and so forth. In an embodiment, the scheduler unit 812 manages the execution of a plurality of tasks on the one or more GPCs 818.

In an embodiment, the scheduler unit 812 is coupled to a work distribution unit 814 that is configured to dispatch tasks for execution on the GPCs 818. In an embodiment, the work distribution unit 814 tracks a number of scheduled tasks received from the scheduler unit 812 and the work distribution unit 814 manages a pending task pool and an active task pool for each of the GPCs 818. In an embodiment, the pending task pool comprises a number of slots (e.g., 32 slots) that contain tasks assigned to be processed by a particular GPC 818; the active task pool may comprise a number of slots (e.g., 4 slots) for tasks that are actively being processed by the GPCs 818 such that as a GPC 818 completes the execution of a task, that task is evicted from the active task pool for the GPC 818 and one of the other tasks from the pending task pool is selected and scheduled for execution on the GPC 818. In an embodiment, if an active task is idle on the GPC 818, such as while waiting for a data dependency to be resolved, then the active task is evicted from the GPC 818 and returned to the pending task pool while another task in the pending task pool is selected and scheduled for execution on the GPC 818.

In an embodiment, the work distribution unit 814 communicates with the one or more GPCs 818 via Xbar 820. In an embodiment, the Xbar 820 is an interconnect network that couples many of the units of the PPU 800 to other units of the PPU 800 and can be configured to couple the work distribution unit 814 to a particular GPC 818. Although not shown explicitly, one or more other units of the PPU 800 may also be connected to the Xbar 820 via the hub 816.

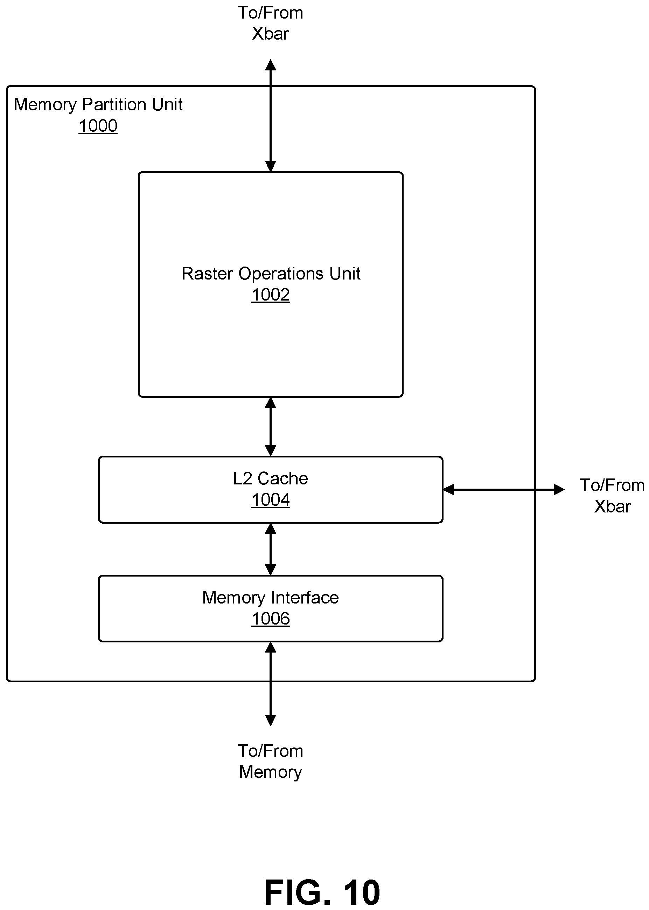

The tasks are managed by the scheduler unit 812 and dispatched to a GPC 818 by the work distribution unit 814. The GPC 818 is configured to process the task and generate results. The results may be consumed by other tasks within the GPC 818, routed to a different GPC 818 via the Xbar 820, or stored in the memory 804. The results can be written to the memory 804 via the partition units 822, which implement a memory interface for reading and writing data to/from the memory 804. The results can be transmitted to another PPU 804 or CPU via the high-speed GPU interconnect 808. In an embodiment, the PPU 800 includes a number U of partition units 822 that is equal to the number of separate and distinct memory devices 804 coupled to the PPU 800. A partition unit 822 will be described in more detail below in conjunction with FIG. 10.

In an embodiment, a host processor executes a driver kernel that implements an application programming interface ("API") that enables one or more applications executing on the host processor to schedule operations for execution on the PPU 800. In an embodiment, multiple compute applications are simultaneously executed by the PPU 800 and the PPU 800 provides isolation, quality of service ("QoS"), and independent address spaces for the multiple compute applications. In an embodiment, an application generates instructions (e.g., in the form of API calls) that cause the driver kernel to generate one or more tasks for execution by the PPU 800 and the driver kernel outputs tasks to one or more streams being processed by the PPU 800. In an embodiment, each task comprises one or more groups of related threads, which may be referred to as a warp. In an embodiment, a warp comprises a plurality of related threads (e.g., 32 threads) that can be executed in parallel. In an embodiment, cooperating threads can refer to a plurality of threads including instructions to perform the task and that exchange data through shared memory. Threads and cooperating threads are described in more detail, in accordance with one embodiment, in conjunction with FIG. 10A.

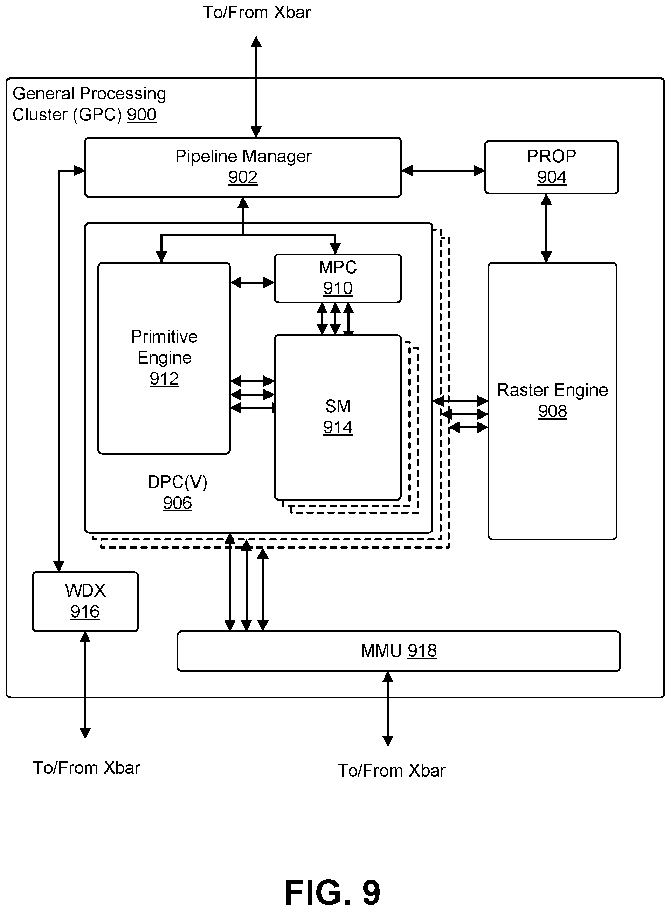

FIG. 9 illustrates a GPC 900 such as the GPC illustrated of the PPU 800 of FIG. 8, in accordance with one embodiment. In an embodiment, each GPC 900 includes a number of hardware units for processing tasks and each GPC 900 includes a pipeline manager 902, a pre-raster operations unit ("PROP") 904, a raster engine 908, a work distribution crossbar ("WDX") 916, a memory management unit ("MMU") 918, one or more Data Processing Clusters ("DPCs") 906, and any suitable combination of parts. It will be appreciated that the GPC 900 of FIG. 9 may include other hardware units in lieu of or in addition to the units shown in FIG. 9.

In an embodiment, the operation of the GPC 900 is controlled by the pipeline manager 902. The pipeline manager 902 manages the configuration of the one or more DPCs 906 for processing tasks allocated to the GPC 900. In an embodiment, the pipeline manager 902 configures at least one of the one or more DPCs 906 to implement at least a portion of a graphics rendering pipeline. In an embodiment, a DPC 906 is configured to execute a vertex shader program on the programmable streaming multiprocessor ("SM") 914. The pipeline manager 902 is configured to route packets received from a work distribution to the appropriate logical units within the GPC 900, in an embodiment, and some packets may be routed to fixed function hardware units in the PROP 904 and/or raster engine 908 while other packets may be routed to the DPCs 906 for processing by the primitive engine 912 or the SM 914. In an embodiment, the pipeline manager 902 configures at least one of the one or more DPCs 906 to implement a neural network model and/or a computing pipeline.

The PROP unit 904 is configured, in an embodiment, to route data generated by the raster engine 908 and the DPCs 906 to a Raster Operations ("ROP") unit in the memory partition unit, described in more detail above. In an embodiment, the PROP unit 904 is configured to perform optimizations for color blending, organize pixel data, perform address translations, and more. The raster engine 908 includes a number of fixed function hardware units configured to perform various raster operations, in an embodiment, and the raster engine 908 includes a setup engine, a coarse raster engine, a culling engine, a clipping engine, a fine raster engine, a tile coalescing engine, and any suitable combination thereof. The setup engine, in an embodiment, receives transformed vertices and generates plane equations associated with the geometric primitive defined by the vertices; the plane equations are transmitted to the coarse raster engine to generate coverage information (e.g., an *x, y* coverage mask for a tile) for the primitive; the output of the coarse raster engine is transmitted to the culling engine where fragments associated with the primitive that fail a z-test are culled, and transmitted to a clipping engine where fragments lying outside a viewing frustum are clipped. In an embodiment, the fragments that survive clipping and culling are passed to the fine raster engine to generate attributes for the pixel fragments based on the plane equations generated by the setup engine. In an embodiment, the output of the raster engine 908 comprises fragments to be processed by any suitable entity such as by a fragment shader implemented within a DPC 906.

In an embodiment, each DPC 906 included in the GPC 900 comprises an M-Pipe Controller ("MPC") 910; a primitive engine 912; one or more SMs 914; and any suitable combination thereof. In an embodiment, the MPC 910 controls the operation of the DPC 906, routing packets received from the pipeline manager 902 to the appropriate units in the DPC 906. In an embodiment, packets associated with a vertex are routed to the primitive engine 912, which is configured to fetch vertex attributes associated with the vertex from memory; in contrast, packets associated with a shader program may be transmitted to the SM 914.

In an embodiment, the SM 914 comprises a programmable streaming processor that is configured to process tasks represented by a number of threads. In an embodiment, the SM 914 is multi-threaded and configured to execute a plurality of threads (e.g., 32 threads) from a particular group of threads concurrently and implements a SIMD (Single-Instruction, Multiple-Data) architecture where each thread in a group of threads (e.g., a warp) is configured to process a different set of data based on the same set of instructions. In an embodiment, all threads in the group of threads execute the same instructions. In an embodiment, the SM 914 implements a SIMT (Single-Instruction, Multiple Thread) architecture wherein each thread in a group of threads is configured to process a different set of data based on the same set of instructions, but where individual threads in the group of threads are allowed to diverge during execution. In an embodiment, a program counter, call stack, and execution state is maintained for each warp, enabling concurrency between warps and serial execution within warps when threads within the warp diverge. In another embodiment, a program counter, call stack, and execution state is maintained for each individual thread, enabling equal concurrency between all threads, within and between warps. In an embodiment, execution state is maintained for each individual thread and threads executing the same instructions may be converged and executed in parallel for better efficiency. In an embodiment, the SM 914 is described in more detail below.

In an embodiment, the MMU 918 provides an interface between the GPC 900 and the memory partition unit and the MMU 918 provides translation of virtual addresses into physical addresses, memory protection, and arbitration of memory requests. In an embodiment, the MMU 918 provides one or more translation lookaside buffers ("TLBs") for performing translation of virtual addresses into physical addresses in memory.

FIG. 10 illustrates a memory partition unit of a PPU, in accordance with one embodiment. In an embodiment, the memory partition unit 1000 includes a Raster Operations ("ROP") unit 1002; a level two ("L2") cache 1004; a memory interface 1006; and any suitable combination thereof. The memory interface 1006 is coupled to the memory. Memory interface 1006 may implement 32, 64, 128, 1024-bit data buses, or the like, for high-speed data transfer. In an embodiment, the PPU incorporates U memory interfaces 1006, one memory interface 1006 per pair of partition units 1000, where each pair of partition units 1000 is connected to a corresponding memory device. For example, PPU may be connected to up to *Y* memory devices, such as high bandwidth memory stacks or graphics double-data-rate, version 5, synchronous dynamic random access memory ("GDDR5 SDRAM").

In an embodiment, the memory interface 1006 implements an HBM2 memory interface and *Y* equals half U. In an embodiment, the HBM2 memory stacks are located on the same physical package as the PPU, providing substantial power and area savings compared with conventional GDDR5 SDRAM systems. In an embodiment, each HBM2 stack includes four memory dies and *Y* equals 4, with HBM2 stack including two 128-bit channels per die for a total of 8 channels and a data bus width of 1024 bits.

In an embodiment, the memory supports Single-Error Correcting Double-Error Detecting ("SECDED") Error Correction Code ("ECC") to protect data. ECC provides higher reliability for compute applications that are sensitive to data corruption. Reliability is especially important in large-scale cluster computing environments where PPUs process very large datasets and/or run applications for extended periods.

In an embodiment, the PPU implements a multi-level memory hierarchy. In an embodiment, the memory partition unit 1000 supports a unified memory to provide a single unified virtual address space for CPU and PPU memory, enabling data sharing between virtual memory systems. In an embodiment the frequency of accesses by a PPU to memory located on other processors is trace to ensure that memory pages are moved to the physical memory of the PPU that is accessing the pages more frequently. In an embodiment, the high-speed GPU interconnect 808 supports address translation services allowing the PPU to directly access a CPU's page tables and providing full access to CPU memory by the PPU.

In an embodiment, copy engines transfer data between multiple PPUs or between PPUs and CPUs. In an embodiment, the copy engines can generate page faults for addresses that are not mapped into the page tables and the memory partition unit 1000 then services the page faults, mapping the addresses into the page table, after which the copy engine performs the transfer. In an embodiment, memory is pinned (i.e., non-pageable) for multiple copy engine operations between multiple processors, substantially reducing the available memory. In an embodiment, with hardware page faulting, addresses can be passed to the copy engines without regard as to whether the memory pages are resident, and the copy process is transparent.

Data from the memory of FIG. 8 or other system memory is fetched by the memory partition unit 1000 and stored in the L2 cache 1004, which is located on-chip and is shared between the various GPCs, in accordance with one embodiment. Each memory partition unit 1000, in an embodiment, includes at least a portion of the L2 cache 960 associated with a corresponding memory device. In an embodiment, lower level caches are implemented in various units within the GPCs. In an embodiment, each of the SMs 1040 may implement a level one ("L1") cache wherein the L1 cache is private memory that is dedicated to a particular SM 1040 and data from the L2 cache 1004 is fetched and stored in each of the L1 caches for processing in the functional units of the SMs 1040. In an embodiment, the L2 cache 1004 is coupled to the memory interface 1006 and the Xbar 820.

The ROP unit 1002 performs graphics raster operations related to pixel color, such as color compression, pixel blending, and more, in an embodiment. The ROP unit $$50, in an embodiment, implements depth testing in conjunction with the raster engine 1025, receiving a depth for a sample location associated with a pixel fragment from the culling engine of the raster engine 1025. In an embodiment, the depth is tested against a corresponding depth in a depth buffer for a sample location associated with the fragment. In an embodiment, if the fragment passes the depth test for the sample location, then the ROP unit 1002 updates the depth buffer and transmits a result of the depth test to the raster engine 1025. It will be appreciated that the number of partition units 1000 may be different than the number of GPCs and, therefore, each ROP unit 1002 can, in an embodiment, be coupled to each of the GPCs. In an embodiment, the ROP unit 1002 tracks packets received from the different GPCs and determines which that a result generated by the ROP unit 1002 is routed to through the Xbar.

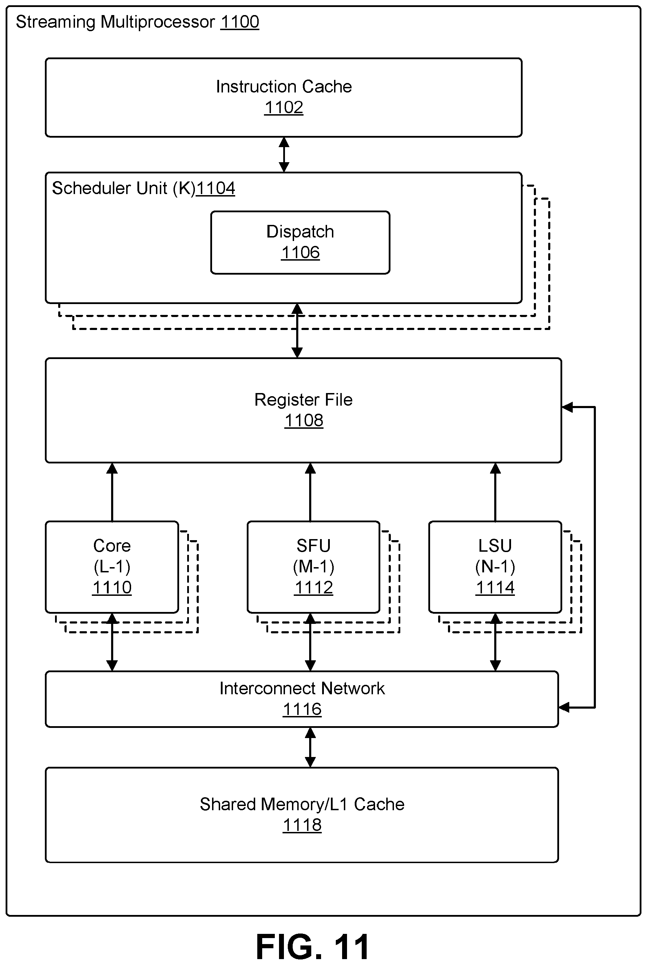

FIG. 11 illustrates a streaming multi-processor such as the streaming multi-processor of FIG. 9, in accordance with one embodiment. In an embodiment, the SM 1100 includes: an instruction cache 1102; one or more scheduler units 1104; a register file 1108; one or more processing cores 1110; one or more special function units ("SFUs") 1112; one or more load/store units ("LSUs") 1114; an interconnect network 1116; a shared memory/L1 cache 1118; and any suitable combination thereof. In an embodiment, the work distribution unit dispatches tasks for execution on the GPCs of the PPU and each task is allocated to a particular DPC within a GPC and, if the task is associated with a shader program, the task is allocated to an SM 1100. In an embodiment, the scheduler unit 1104 receives the tasks from the work distribution unit and manages instruction scheduling for one or more thread blocks assigned to the SM 1100. In an embodiment, the scheduler unit 1104 schedules thread blocks for execution as warps of parallel threads, wherein each thread block is allocated at least one warp. In an embodiment, each warp executes threads. In an embodiment, the scheduler unit 1104 manages a plurality of different thread blocks, allocating the warps to the different thread blocks and then dispatching instructions from the plurality of different cooperative groups to the various functional units (e.g., cores 1110, SFUs 1112, and LSUs 1114) during each clock cycle.

Cooperative Groups may refer to a programming model for organizing groups of communicating threads that allows developers to express the granularity at which threads are communicating, enabling the expression of richer, more efficient parallel decompositions. In an embodiment, cooperative launch APIs support synchronization amongst thread blocks for the execution of parallel algorithms. In an embodiment, applications of conventional programming models provide a single, simple construct for synchronizing cooperating threads: a barrier across all threads of a thread block (e.g., the syncthreads() function). However, programmers would often like to define groups of threads at smaller than thread block granularities and synchronize within the defined groups to enable greater performance, design flexibility, and software reuse in the form of collective group-wide function interfaces. Cooperative Groups enables programmers to define groups of threads explicitly at sub-block (i.e., as small as a single thread) and multi-block granularities, and to perform collective operations such as synchronization on the threads in a cooperative group. The programming model supports clean composition across software boundaries, so that libraries and utility functions can synchronize safely within their local context without having to make assumptions about convergence. Cooperative Groups primitives enable new patterns of cooperative parallelism, including producer-consumer parallelism, opportunistic parallelism, and global synchronization across an entire grid of thread blocks.

In an embodiment, a dispatch unit 1106 is configured to transmit instructions to one or more of the functional units and the scheduler unit 1104 includes two dispatch units 1106 that enable two different instructions from the same warp to be dispatched during each clock cycle. In an embodiment, each scheduler unit 1104 includes a single dispatch unit 1106 or additional dispatch units 1106.

Each SM 1100, in an embodiment, includes a register file 1108 that provides a set of registers for the functional units of the SM 1100. In an embodiment, the register file 1108 is divided between each of the functional units such that each functional unit is allocated a dedicated portion of the register file 1108. In an embodiment, the register file 1108 is divided between the different warps being executed by the SM 1100 and the register file 1108 provides temporary storage for operands connected to the data paths of the functional units. In an embodiment, each SM 1100 comprises a plurality of $L$ processing cores 1110. In an embodiment, the SM 1100 includes a large number (e.g., 128 or more) of distinct processing cores 1110. Each core 1110, in an embodiment, includes a fully-pipelined, single-precision, double-precision, and/or mixed precision processing unit that includes a floating point arithmetic logic unit and an integer arithmetic logic unit. In an embodiment, the floating point arithmetic logic units implement the IEEE 754-2008 standard for floating point arithmetic. In an embodiment, the cores 1110 include 64 single-precision (32-bit) floating point cores, 64 integer cores, 32 double-precision (64-bit) floating point cores, and 8 tensor cores.

Tensor cores are configured to perform matrix operations in accordance with an embodiment. In an embodiment, one or more tensor cores are included in the cores 1110. In an embodiment, the tensor cores are configured to perform deep learning matrix arithmetic, such as convolution operations for neural network training and inferencing. In an embodiment, each tensor core operates on a 4x4 matrix and performs a matrix multiply and accumulate operation $D = A \times B + C$, where $A$, $B$, $C$, and $D$ are 4x4 matrices.

In an embodiment, the matrix multiply inputs A and B are 16-bit floating point matrices and the accumulation matrices C and D are 16-bit floating point or 32-bit floating point matrices. In an embodiment, the tensor cores operate on 16-bit floating point input data with 32-bit floating point accumulation. In an embodiment, the 16-bit floating point multiply requires 64 operations and results in a full precision product that is then accumulated using 32-bit floating point addition with the other intermediate products for a 4x4x4 matrix multiply. Tensor cores are used to perform much larger two-dimensional or higher dimensional matrix operations, built up from these smaller elements, in an embodiment. In an embodiment, an API, such as CUDA 9 C++ API, exposes specialized matrix load, matrix multiply and accumulate, and matrix store operations to efficiently use tensor cores from a CUDA-C++ program. In an embodiment, at the CUDA level, the warp-level interface assumes 16x16 size matrices spanning all 32 threads of the warp.

In an embodiment, each SM 1100 comprises $M$ SFUs 1112 that perform special functions (e.g., attribute evaluation, reciprocal square root, and the like). In an embodiment, the SFUs 1112 include a tree traversal unit configured to traverse a hierarchical tree data structure. In an embodiment, the SFUs 1112 include texture unit configured to perform texture map filtering operations. In an embodiment, the texture units are configured to load texture maps (e.g., a 2D array of texels) from the memory and sample the texture maps to produce sampled texture values for use in shader programs executed by the SM 1100. In an embodiment, the texture maps are stored in the shared memory/L1 cache. The texture units implement texture operations such as filtering operations using mip-maps (e.g., texture maps of varying levels of detail), in accordance with one embodiment. In an embodiment, each SM 1100 includes two texture units.

Each SM 1100 comprises $N$ LSUs 1054 that implement load and store operations between the shared memory/L1 cache 1006 and the register file 1108, in an embodiment. Each SM 1100 includes an interconnect network 1116 that connects each of the functional units to the register file 1108 and the LSU 1114 to the register file 1108, shared memory/ L1 cache 1118 in an embodiment. In an embodiment, the interconnect network 1116 is a crossbar that can be configured to connect any of the functional units to any of the registers in the register file 1108 and connect the LSUs 1114 to the register file and memory locations in shared memory/L1 cache 1118.

The shared memory/L1 cache 1118 is an array of on-chip memory that allows for data storage and communication between the SM 1100 and the primitive engine and between threads in the SM 1100 in an embodiment. In an embodiment, the shared memory/L1 cache 1118 comprises 128KB of storage capacity and is in the path from the SM 1100 to the partition unit. The shared memory/L1 cache 1118, in an embodiment, is used to cache reads and writes. One or more of the shared memory/L1 cache 1118, L2 cache, and memory are backing stores.

Combining data cache and shared memory functionality into a single memory block provides improved performance for both types of memory accesses, in an embodiment. The capacity, in an embodiment, is used or is usable as a cache by programs that do not use shared memory, such as if shared memory is configured to use half of the capacity, texture and load/store operations can use the remaining capacity. Integration within the shared memory/L1 cache 1118 enables the shared memory/L1 cache 1118 to function as a high-throughput conduit for streaming data while simultaneously providing high-bandwidth and low-latency access to frequently reused data, in accordance with an embodiment. When configured for general purpose parallel computation, a simpler configuration can be used compared with graphics processing. In an embodiment, fixed function graphics processing units are bypassed, creating a much simpler programming model. In the general purpose parallel computation configuration, the work distribution unit assigns and distributes blocks of threads directly to the DPCs, in an embodiment. The threads in a block execute the same program, using a unique thread ID in the calculation to ensure each thread generates unique results, using the SM 1100 to execute the program and perform calculations, shared memory/L1 cache 1118 to communicate between threads, and the LSU 1114 to read and write global memory through the shared memory/L1 cache 1118 and the memory partition unit, in accordance with one embodiment. In an embodiment, when configured for general purpose parallel computation, the SM 1100 writes commands that the scheduler unit can use to launch new work on the DPCs.

In an embodiment, the PPU is included in or coupled to a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, and more. In an embodiment, the PPU is embodied on a single semiconductor substrate. In an embodiment, the PPU is included in a system-on-a-chip ("SoC") along with one or more other devices such as additional PPUs, the memory, a reduced instruction set computer ("RISC") CPU, a memory management unit ("MMU"), a digital-to-analog converter ("DAC"), and the like.

In an embodiment, the PPU may be included on a graphics card that includes one or more memory devices. The graphics card may be configured to interface with a PCIe slot on a motherboard of a desktop computer. In yet another embodiment, the PPU may be an integrate graphics processing unit ("iGPU") included in the chipset of the motherboard.

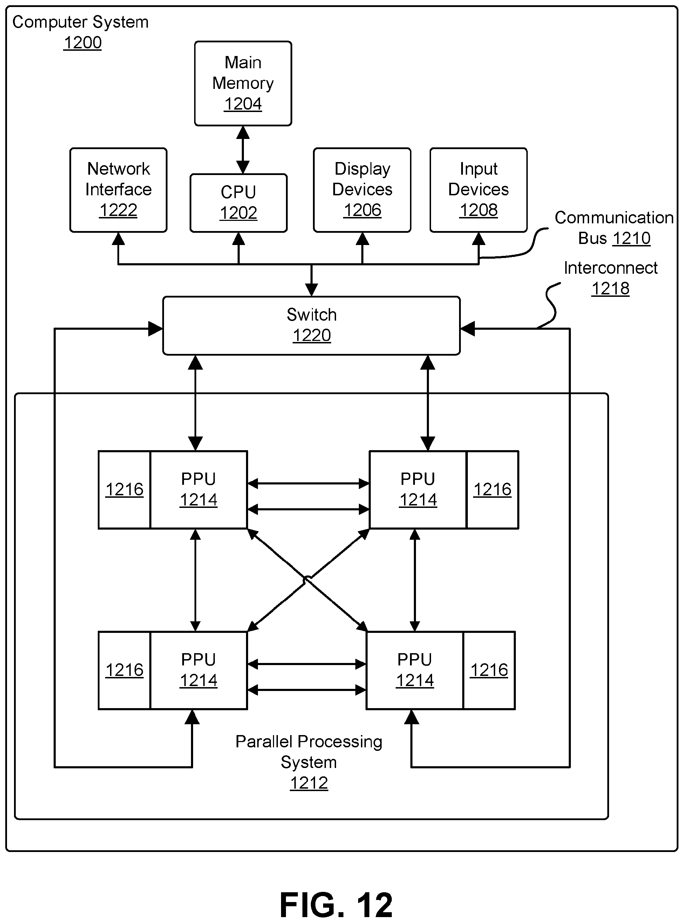

FIG. 12 illustrates a computer system 1200 in which the various architecture and/or functionality can be implemented, in accordance with one embodiment. The computer system 1200, in an embodiment, is configured to implement various processes and methods described throughout this disclosure.

In an embodiment, the computer system 1200 comprises at least one central processing unit 1202 that is connected to a communication bus 1210 implemented using any suitable protocol, such as PCI (Peripheral Component Interconnect), PCI-Express, AGP (Accelerated Graphics Port), HyperTransport, or any other bus or point-to-point communication protocol(s). In an embodiment, the computer system 1200 includes a main memory 1204 and control logic (e.g., implemented as hardware, software, or a combination thereof) and data are stored in the main memory 1204 which may take the form of random access memory ("RAM"). In an embodiment, a network interface subsystem 1222 provides an interface to other computing devices and networks for receiving data from and transmitting data to other systems from the computer system 1200.

The computer system 1200, in an embodiment, includes input devices 1208, the parallel processing system 1212, and display devices 1206 which can be implemented using a conventional CRT (cathode ray tube), LCD (liquid crystal display), LED (light emitting diode), plasma display, or other suitable display technologies. In an embodiment, user input is received from input devices 1208 such as keyboard, mouse, touchpad, microphone, and more. In an embodiment, each of the foregoing modules can be situated on a single semiconductor platform to form a processing system.

In the present description, a single semiconductor platform may refer to a sole unitary semiconductor-based integrated circuit or chip. It should be noted that the term single semiconductor platform may also refer to multi-chip modules with increased connectivity which simulate on-chip operation, and make substantial improvements over utilizing a conventional central processing unit ("CPU") and bus implementation. Of course, the various modules may also be situated separately or in various combinations of semiconductor platforms per the desires of the user.

In an embodiment, computer programs in the form of machine-readable executable code or computer control logic algorithms are stored in the main memory 1204 and/or secondary storage. Computer programs, if executed by one or more processors, enable the system 1200 to perform various functions in accordance with one embodiment. The memory 1204, the storage, and/or any other storage are possible examples of computer-readable media. Secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory.

In an embodiment, the architecture and/or functionality of the various previous figures are implemented in the context of the central processor 1202; parallel processing system 1212; an integrated circuit capable of at least a portion of the capabilities of both the central processor 1202; the parallel processing system 1212; a chipset (e.g., a group of integrated circuits designed to work and sold as a unit for performing related functions, etc.); and any suitable combination of integrated circuit.

In an embodiment, the architecture and/or functionality of the various previous figures is be implemented in the context of a general computer system, a circuit board system, a game console system dedicated for entertainment purposes, an application-specific system, and more. In an embodiment, the computer system 1200 may take the form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic.

In an embodiment, a parallel processing system 1212 includes a plurality of PPUs 1214 and associated memories 1216. In an embodiment, the PPUs are connected to a host processor or other peripheral devices via an interconnect 1218 and a switch 1220 or multiplexer. In an embodiment, the parallel processing system 1212 distributes computational tasks across the PPUs 1214 which can be parallelizable - for example, as part of the distribution of computational tasks across multiple GPU thread blocks. In an embodiment, memory is shared and accessible (e.g., for read and/or write access) across some or all of the PPUs 1214, although such shared memory may incur performance penalties relative to the use of local memory and registers resident to a PPU. In an embodiment, the operation of the PPUs 1214 is synchronized through the use of a command such as _syncthreads() which requires all threads in a block (e.g., executed across multiple PPUs 1214) to reach a certain point of execution of code before proceeding.

The specification and drawings are, accordingly, to be regarded in an illustrative rather than a restrictive sense. It will, however, be evident that various modifications and changes may be made thereunto without departing from the broader spirit and scope of the invention as set forth in the claims.

Other variations are within the spirit of the present disclosure. Thus, while the disclosed techniques are susceptible to various modifications and alternative constructions, certain illustrated embodiments thereof are shown in the drawings and have been described above in detail. It should be understood, however, that there is no intention to limit the invention to the specific form or forms disclosed, but on the contrary, the intention is to cover all modifications, alternative constructions, and equivalents falling within the spirit and scope of the invention, as defined in the appended claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within the range, unless otherwise indicated herein and each separate value is incorporated into the specification as if it were individually recited herein. The use of the term "set" (e.g., "a set of items") or "subset" unless otherwise noted or contradicted by context, is to be construed as a nonempty collection comprising one or more members. Further, unless otherwise noted or contradicted by context, the term "subset" of a corresponding set does not necessarily denote a proper subset of the corresponding set, but the subset and the corresponding set may be equal.

Conjunctive language, such as phrases of the form "at least one of A, B, and C," or "at least one of A, B and C," unless specifically stated otherwise or otherwise clearly contradicted by context, is otherwise understood with the context as used in general to present that an item, term, etc., may be either A or B or C, or any nonempty subset of the set of A and B and C. For instance, in the illustrative example of a set having three members, the conjunctive phrases "at least one of A, B, and C" and "at least one of A, B and C" refer to any of the following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, the term "plurality" indicates a state of being plural (e.g., "a plurality of items" indicates multiple items). The number of items in a plurality is at least two, but can be more when so indicated either explicitly or by context. Further, unless stated otherwise or otherwise clear from context, the phrase "based on" means "based at least in part on" and not "based solely on."

Operations of processes described herein can be performed in any suitable order unless otherwise indicated herein or otherwise clearly contradicted by context. In an embodiment, a process such as those processes described herein (or variations and/or combinations thereof) is performed under the control of one or more computer systems configured with executable instructions and is implemented as code (e.g., executable instructions, one or more computer programs or one or more applications) executing collectively on one or more processors, by hardware or combinations thereof. In an embodiment, the code is stored on a computer-readable storage medium, for example, in the form of a computer program comprising a plurality of instructions executable by one or more processors. In an embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In an embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause the computer system to perform operations described herein. The set of non-transitory computer-readable storage media, in an embodiment, comprises multiple non-transitory computer-readable storage media and one or more of individual non-transitory storage media of the multiple non-transitory computer-readable storage media lack all of the code while the multiple non-transitory computer-readable storage media collectively store all of the code. In an embodiment, the executable instructions are executed such that different instructions are executed by different processors - for example, a non-transitory computer-readable storage medium store instructions and a main CPU execute some of the instructions while a graphics processor unit executes other instructions. In an embodiment, different components of a computer system have separate processors and different processors execute different subsets of the instructions.

Accordingly, in an embodiment, computer systems are configured to implement one or more services that singly or collectively perform operations of processes described herein and such computer systems are configured with applicable hardware and/or software that enable the performance of the operations. Further, a computer system that implement an embodiment of the present disclosure is a single device and, in another embodiment, is a distributed computer system comprising multiple devices that operate differently such that the distributed computer system performs the operations described herein and such that a single device does not perform all operations.

The use of any and all examples, or exemplary language (e.g., "such as") provided herein, is intended merely to better illuminate embodiments of the invention and does not pose a limitation on the scope of the invention unless otherwise claimed. No language in the specification should be construed as indicating any non-claimed element as essential to the practice of the invention.

Embodiments of this disclosure are described herein, including the best mode known to the inventors for carrying out the invention. Variations of those embodiments may become apparent to those of ordinary skill in the art upon reading the foregoing description. The inventors expect skilled artisans to employ such variations as appropriate and the inventors intend for embodiments of the present disclosure to be practiced otherwise than as specifically described herein. Accordingly, the scope of the present disclosure includes all modifications and equivalents of the subject matter recited in the claims appended hereto as permitted by applicable law. Moreover, any combination of the above-described elements in all possible variations thereof is encompassed by the scope of the present disclosure unless otherwise indicated herein or otherwise clearly contradicted by context.

All references, including publications, patent applications, and patents, cited herein are hereby incorporated by reference to the same extent as if each reference were individually and specifically indicated to be incorporated by reference and were set forth in its entirety herein.

In the description and claims, the terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout the specification terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

In a similar manner, the term "processor" may refer to any device or portion of a device that processes electronic data from registers and/or memory and transform that electronic data into other electronic data that may be stored in registers and/or memory. As non-limiting examples, "processor" may be a Central Processing Unit (CPU) or a Graphics Processing Unit (GPU). A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. The terms "system" and "method" are used herein interchangeably insofar as the system may embody one or more methods and the methods may be considered a system.

In the present document, references may be made to obtaining, acquiring, receiving, or inputting analog or digital data into a subsystem, computer system, or computer-implemented machine. The process of obtaining, acquiring, receiving, or inputting analog and digital data can be accomplished in a variety of ways such as by receiving the data as a parameter of a function call or a call to an application programming interface. In some implementations, the process of obtaining, acquiring, receiving, or inputting analog or digital data can be accomplished by transferring the data via a serial or parallel interface. In another implementation, the process of obtaining, acquiring, receiving, or inputting analog or digital data can be accomplished by transferring the data via a computer network from the providing entity to the acquiring entity. References may also be made to providing, outputting, transmitting, sending, or presenting analog or digital data. In various examples, the process of providing, outputting, transmitting, sending, or presenting analog or digital data can be accomplished by transferring the data as an input or output parameter of a function call, a parameter of an application programming interface or interprocess communication mechanism.

Although the discussion above sets forth example implementations of the described techniques, other architectures may be used to implement the described functionality, and are intended to be within the scope of this disclosure. Furthermore, although specific distributions of responsibilities are defined above for purposes of discussion, the various functions and responsibilities might be distributed and divided in different ways, depending on circumstances.

Furthermore, although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

**Claims**

1. A processor, comprising:

   comparison logic to compare two or more boundaries of one or more features of one or more images based, at least in part, on one or more neural networks trained to identify the two or more boundaries; and
   indication logic coupled to the comparison logic to indicate whether the two or more boundaries differ by at least a first threshold.

2. The processor of claim 1, wherein the two or more boundaries comprise a first label mask representing boundaries of objects in an image that are boundaries in a segmentation determined from a first segmentation process and a second label mask representing an output of a shape evaluation process into which the first label mask was an input, and wherein the indication logic is configured to compare the first label mask and the second label mask to determine a quality of the segmentation.

3. The processor of claim 2, further comprising a first trained neural network that performs the first segmentation process to output the first label mask in response to obtaining a representation of the image.

4. The processor of claim 3, further comprising a second trained neural network that performs the shape evaluation process using the first label mask as its input and outputs the second label mask, wherein preferably the second trained neural network is an autoencoder with an internal layer that maps its input to a latent representation in a feature space where features in the feature space are shape features, and more preferably the autoencoder is a variational autoencoder.

5. The processor of claim 4, further comprising logic for training the second trained neural network using a training subcollection of segment datasets, wherein a segment dataset of the training subcollection comprises a training image and a corresponding training label mask.

6. The processor of claim 5, wherein the logic for training the second trained neural network further uses a validation subcollection of segment datasets.

7. The processor of any of the preceding claims, wherein the processor comprises a graphical processing unit, GPU.

8. A method, using a processor comprising one or more arithmetic logic units, ALUs, of processing an image, comprising:

   comparing two or more boundaries of one or more features of one or more images based, at least in part, on one or more neural networks trained to identify the two or more boundaries; and
   indicating whether the two or more boundaries differ by at least a first threshold.

9. The method of claim 8, further comprising:

   generating a segmentation of the image, wherein the segmentation represents a processor-determined set of boundaries of objects depicted in the image;
   inputting the segmentation to a neural network previously trained on a collection of training segmentations;
   comparing the segmentation to an output of the neural network; and
   determining a score for the segmentation, wherein the score is a function of differences between the segmentation and the output of the neural network.

10. The method of claim 9, wherein the neural network is a variational autoencoder that takes the segmentation as its input, wherein the variational autoencoder maps features of its input to a reduced feature space from which the segmentation can be approximately reproduced from features in the reduced feature space.

11. The method of claim 10, further comprising at least one of the following:

training the variational autoencoder with the collection of training segmentations, wherein the collection of training segmentations are represented by label masks that are ground truth label masks of images in that segmentations of those label masks are previously determined to be good segmentations of the images;

training a segmenter to generate the segmentation of the image by applying a collection of segment datasets to the segmenter, wherein each segment dataset of the collection of segment datasets comprises a training image and a corresponding training label mask that is a ground truth label mask of the training image in that the segmentation in the corresponding training label mask had previously been determined to be a good segmentation of the training image;

performing, using a first trained neural network, a first segmentation process to output the first label mask in response to obtaining a representation of the image;

performing, using a second trained neural network, a shape evaluation process using a first label mask as an input and outputs a second label mask.

12. The processor of claim 11, further comprising mapping an input of the second trained neural network to a latent representation in a feature space where features in the feature space are shape features.

13. The processor of claim 12, wherein the second trained neural network is a variational autoencoder.

14. A system, comprising memory to store instructions that, as a result of execution by one or more processors, causes the system to:

train one or more neural networks as a variational autoencoder (VAE) using, at least in part, a collection of one or more training segmentations that are ground truth label masks of images in that segmentations of a training segmentation of the collection of one or more training segmentations is a segmentation previously determined to be good segmentations of images depicting objects; and

training a segmenter to generate, from images, label mask representing processor-determined segmentations of the images, wherein the training comprises applying a collection of segment datasets to the segmenter, wherein each segment dataset of the collection of segment datasets comprises a training image and a corresponding training label mask that is a ground truth label mask of the training image in that the segmentation in the corresponding training label mask had previously been determined to be a good segmentation of the training image.

15. The system of claim 14, wherein the instructions further cause the system to:

generate a segmentation of an input image, wherein the segmentation represents a processor-determined set of boundaries of objects depicted in the input image;

input the segmentation to as a VAE input to the VAE;

compare the VAE input to a VAE output of the VAE; and

determine a score for the segmentation, wherein the score is a function of differences between the VAE input and the VAE output.

16. The system of claim 15, further comprising:

outputting the score;

determining if the score is within a predetermined range; and

output an alarm signal if the score is within the predetermined range.

104

Image

102

Background

Object 1:
Pancreas

106

Label Mask

Segment Dataset

# FIG. 1

200

Computing
Entity 202

Training
Collection 206

Segmenter 210

Tuning

Label Masks 206

# FIG. 2

**FIG. 3**

400

Computing
Entity 402

Training Feedback

Autoencoder 408

Output Label
Masks 406

Comparator 412

Ground Truth
Label Masks 404

**FIG. 4**

500

502 Start Training

504 Apply Set of Ground Truth Label Masks as an Input Label Mask Set to an Autoencoder for Training Get Output Label Masks

506 Compare Input Label Masks with Output Label Masks

508 Tune Autoencoder to Reduce Difference Between Input Label Masks and Output Label Masks

510 Apply Training Collection to Segmenter

520 Provide Feedback

512 Compare Output of Segmenter to Label Masks of Segment Dataset

514 Is Segmenter Tuned?

N

Y

516 Validate Segmenter with Validation Collection

518 If Needed, Perform Further Training

522 End Training

# FIG. 5

600

**Computing Entity 602**

**Input Image 610**

**Autoencoder 606**

620  622  624

| Enc | L.R. | Dec |

**Autoencoder Output 630**

**Trained Segmenter 604**

**Label Mask 612**

**Comparator 608**

**Quality Indicator (Alarm, Quality Value, Etc.) 614**

Output of Segmentation Process

# FIG. 6

Autoencoder
702

704

712

706

710

708

Input Layer X

Hidden Layer

Latent Repres-entation

Hidden Layer

Output Layer Y

Encoder

Decoder

# FIG. 7

**FIG. 8**

To/From Xbar

FIG. 9

To/From
Xbar

Memory Partition Unit
1000

Raster Operations Unit
1002

L2 Cache
1004

To/From
Xbar

Memory Interface
1006

To/From
Memory

# FIG. 10

Streaming Multiprocessor 1100

Instruction Cache
1102

Scheduler Unit (K)1104

Dispatch
1106

Register File
1108

Core
(L-1)
1110

SFU
(M-1)
1112

LSU
(N-1)
1114

Interconnect Network
1116

Shared Memory/L1 Cache
1118

FIG. 11

**FIG. 12**

Europäisches
Patentamt

European
Patent Office

Office européen
des brevets

# EUROPEAN SEARCH REPORT

Application Number

EP 20 16 7175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/109893 A1 (CONG LIN [CN] ET AL) 20 April 2017 (2017-04-20) | 1,7,8 | INV. G06T7/00 |
| Y | * abstract * | 9-13 | G06T7/12 |
| A | * paragraph [0004] - paragraph [0010] * | 2-6,15, 16 | G06T7/143 G06K9/00 |
| | ----- | | |
| X | AGISILAOS CHARTSIAS ET AL: "Factorised Representation Learning in Cardiac Image Analysis", ARXIV.ORG, CORNELL UNIVERSITY LIBRARY, 201 OLIN LIBRARY CORNELL UNIVERSITY ITHACA, NY 14853, 22 March 2019 (2019-03-22), XP081156788, | 14 | |
| Y | * abstract * | 9-13 | |
| A | * page 2, section 1.2, paragraph 2 * * page 5, sections 2.4 and section 3 * * page 7, section 3.2 * * figure 2 * | 15,16 | |
| | ----- | | |

TECHNICAL FIELDS
SEARCHED        (IPC)

G06T
G06K

The present search report has been drawn up for all claims

| Place of search | Date of completion of the search | Examiner |
|---|---|---|
| Munich | 28 August 2020 | Turina, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................

& : member of the same patent family, corresponding
    document

EPO FORM 1503 03.82 (P04C01)

**EP 3 726 465 A1**

## ANNEX TO THE EUROPEAN SEARCH REPORT
## ON EUROPEAN PATENT APPLICATION NO.

EP 20 16 7175

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2020

| Patent document cited in search report | Publication date | Patent family member(s) | Publication date |
|---|---|---|---|
| US 2017109893 A1 | 20-04-2017 | NONE | |

For more details about this annex : see Official Journal of the European Patent Office, No. 12/82

EPO FORM P0459

33